# EUROPEAN PATENT APPLICATION

(11) **EP 1 486 409 A2**
(43) Date of publication of application: **15.12.2004**
(21) Application number: 04009542.4
(22) Date of filing: 22.04.2004
(51) Int. Cl.: B62K 19/30, B62H 5/00

(54) **Housing support structure of an anti-theft u-shaped lockin tool in a vehicle**

(30) Priority: 09.06.2003 JP 2003164190
(71) Applicant: HONDA MOTOR CO., Ltd., Tokyo (JP)
(72) Inventor: Nagashii, Toshihisa, Wako-shi Saitama (JP)
(74) Representative: Rupp, Christian, Dipl.Phys.

(57) **Abstract**

To enhance a degree of freedom in design below and between both seat rails, enhancing the supporting rigidity of an anti-theft U-shaped locking tool in a vehicle in which a housing that can house the anti-theft U-shaped locking tool is formed inside a rear cover covering at least each outside of both seat rails. A rear cover (54) is at least provided with a pair of right and left side covers (68) covering both seat rails (21) from the outside and a bottom cover (69) forming the bottom of a housing (67), provided between both side covers (68) and covering both seat rails (21) from the upside, a protrusion (21c) which pierces the bottom cover (69) and the upper end of which is protruded into the housing 67 is provided to both seat rails (21), and both ends of a hook (64) with which an anti-theft U-shaped locking tool (66) housed in the housing (67) is provided are fitted to a cross plate (71) laid between the upper ends of both protrusions (21c) in the housing (67).

## Description

The present invention relates to a vehicle where a pair of right and left seat rails extended so that the rear is higher are connected to the rear of a main frame extended so that the rear is lower from a head pipe supporting a front fork supporting a front wheel so that the front fork can be steered and a housing that can house an anti-theft U-shaped locking tool provided with a substantially U-shaped hook and a bar detachable in a direction perpendicular to both ends of the hook is formed inside a rear cover which covers at least each outside of both seat rails and above which lids that can be lifted are provided, particularly relates to the improvement of structure for housing and supporting an anti-theft U-shaped locking tool in a housing in a motorcycle and others.

### [Prior Art]

A type that a housing having a mud guard covering a rear wheel from the upside as the bottom is formed inside a rear cover which covers the outside of a pair of right and left seat rails and above which a seat that can be lifted is provided with a part of both seat rails housed and an anti-theft U-shaped locking tool housed in the housing is supported by both seat rails is already known (see e.g. JP-A-7-329847).

### [Problem to be Solved by the Invention]

Though supporting rigidity is enhanced and the locking tool can be supported in case the anti-theft U-shaped locking tool is housed and supported in the housing in the above-mentioned conventional type structure, a degree of freedom in design below and between both seat rails is limited because a part of both seat rails is housed in the housing.

The invention is made in view of such a situation and the object is to provide the housing support structure of an anti-theft U-shaped locking tool in a vehicle in which a degree of freedom in designbelowandbetweenboth seat rails is enhanced, enhancing the supporting rigidity of the anti-theft U-shaped locking tool.

This object is achieved by means of the features of the independent claims. The dependent claims develop further the central idea of the present invention.

The invention according to Claim 1 is based upon a vehicle in which a pair of right and left seat rails extended so that the rear is higher are connected to the rear of a main frame extended so that the rear is lower from a head pipe supporting a front fork supporting a front wheel so that the front fork can be steered and a housing that can house an anti-theft U-shaped locking tool provided with a substantially U-shaped hook and a bar detachable in a direction perpendicular to both ends of the hook is formed inside a rear cover which covers at least each outside of both seat rails and above which lids that can be lifted are provided, and is characterized in that the rear cover is at least provided with a pair of right and left side covers covering both seat rails from the outside and a bottom cover forming the bottom of the housing, provided between both side covers and covering both seat rails from the upside, a protrusion which pierces the bottom cover and the upper end of which is protruded into the housing is provided to both seat rails and the hook with which the anti-theft U-shaped locking tool is provided housed in the housing is fitted to a cross plate laid between the upper ends of both protrusions in the housing.

According to the above-mentioned configuration of the invention according to Claim 1, as the anti-theft U-shaped locking tool is housed in the housing formed inside the rear cover provided with the bottom cover covering a pair of seat rails from the upside so that the bottom cover functions as the bottom, a degree of freedom in design below and between both seat rails can be enhanced, and in addition, as the hook with which the anti-theft U-shaped locking tool housed in the housing is provided is fitted to the cross plate tying the protrusions of both seat rails in the housing, the supporting rigidity of the anti-theft U-shaped locking tool can be also enhanced.

Besides, the invention according to Claim 2 is based upon the configuration of the invention according to Claim 1 and is characterized in that an exhaust muffler ranging to an engine suspended from the main frame is arranged between both seat rails below the bottom cover and is supported by both seat rails. According to such configuration, the exhaust muffler can be arranged effectively utilizing space made between both seat rails.

Further, the invention according to Claim 3 is based upon the configuration of the invention according to Claim 1 or 2 and is characterized in that a high-level part raised upward in the center between both seat rails and a pair of low-level parts holding the high-level part between them and fastened to both protrusions are provided and both ends of the hook with which the anti-theft U-shaped locking tool is provided are fitted to both low-level parts. According to such configuration, the rigidity of the cross plate can be enhanced by curving the cross plate and both ends of the hook can be stably supported by the cross plate effectively utilizing a curved shape of the cross plate.

Referring to the attached drawings, one embodiment of the invention will be described below to explain further advantages, objects and features of the present invention.
Fig. 1 is a side view showing a motorcycle;
Fig. 2 is an enlarged plan viewed from a direction shown by an arrow 2 in Fig. 1;
Fig. 3 is a sectional view viewed along a line 3-3 shown in Fig. 2;
Fig. 4 is a plan viewed along a line 4-4 shown in Fig. 3 in a state in which a rear cover is detached;
Fig. 5 is a sectional view viewed along a line 5-5 shown in Fig. 3;
Fig. 6 is a plan corresponding to Fig. 4 in a state in which an upper cover and side covers out of the rear cover are detached; and
Fig. 7 is a perspective view showing the state shown in Fig. 6 viewed from the diagonal upside.

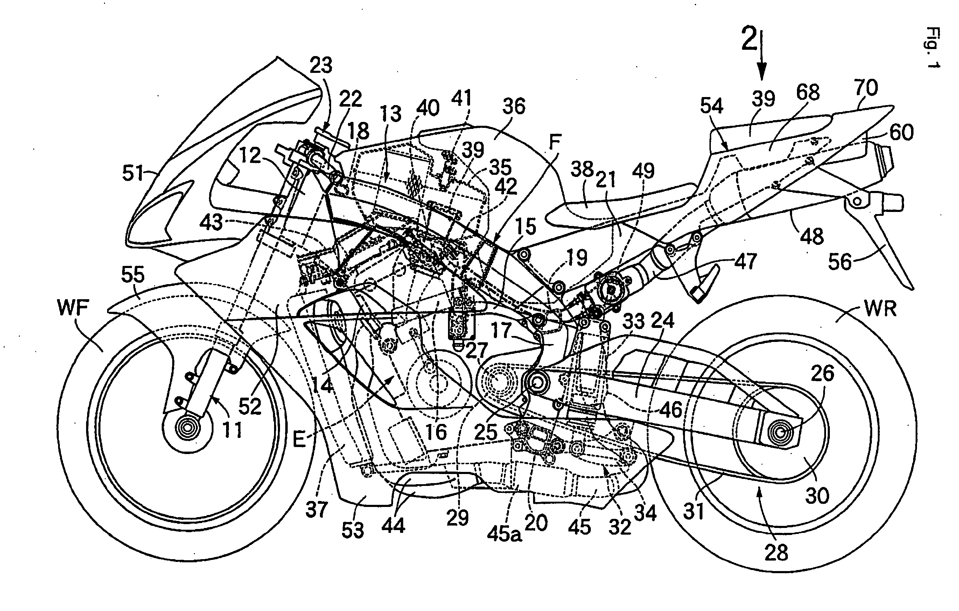

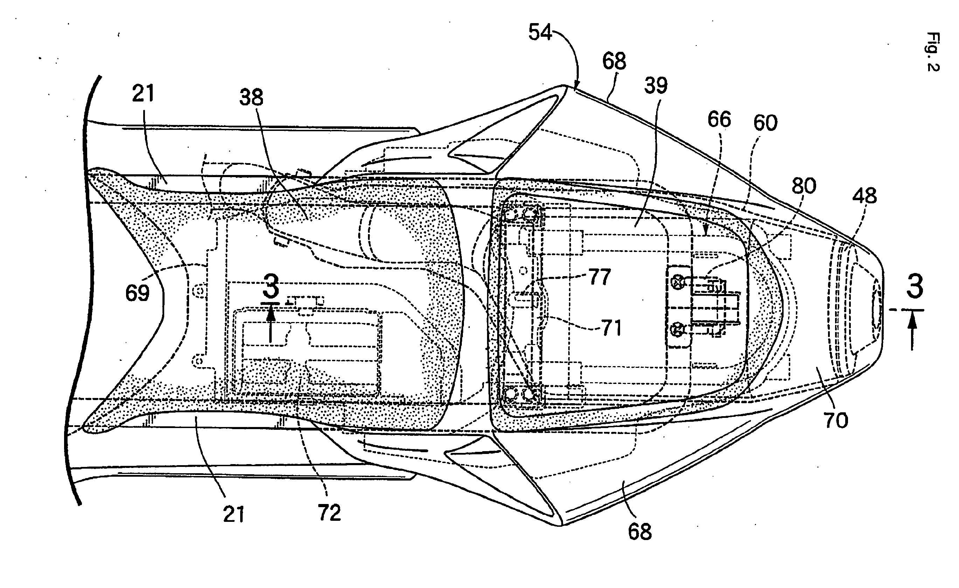

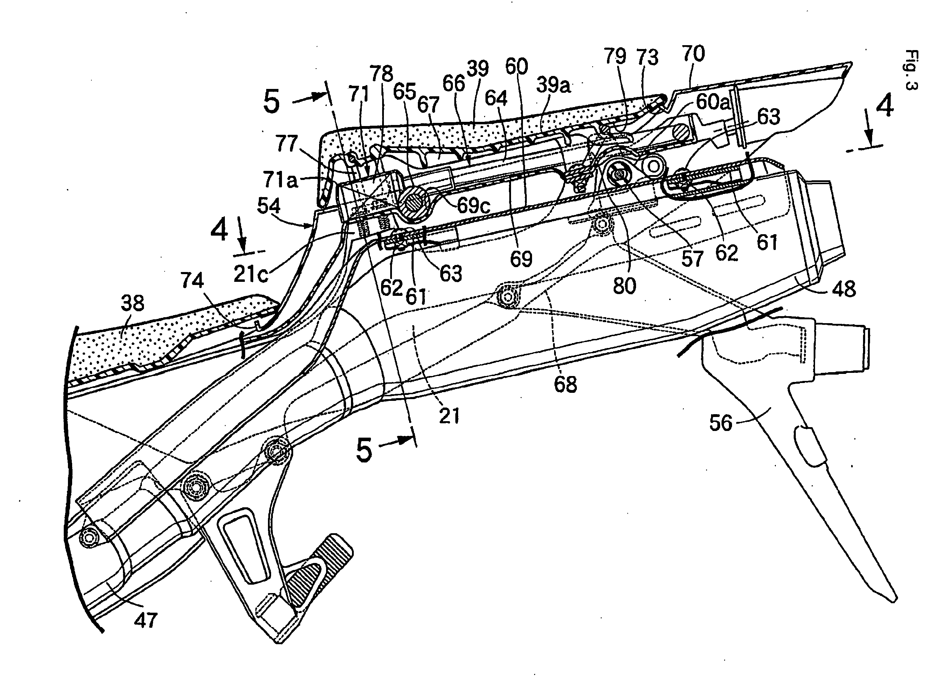

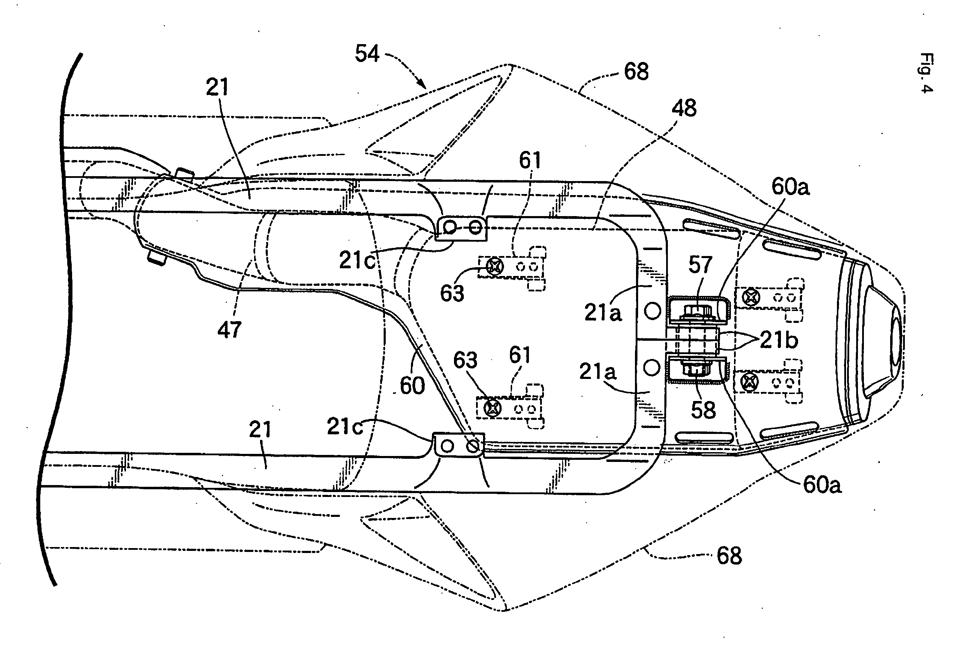

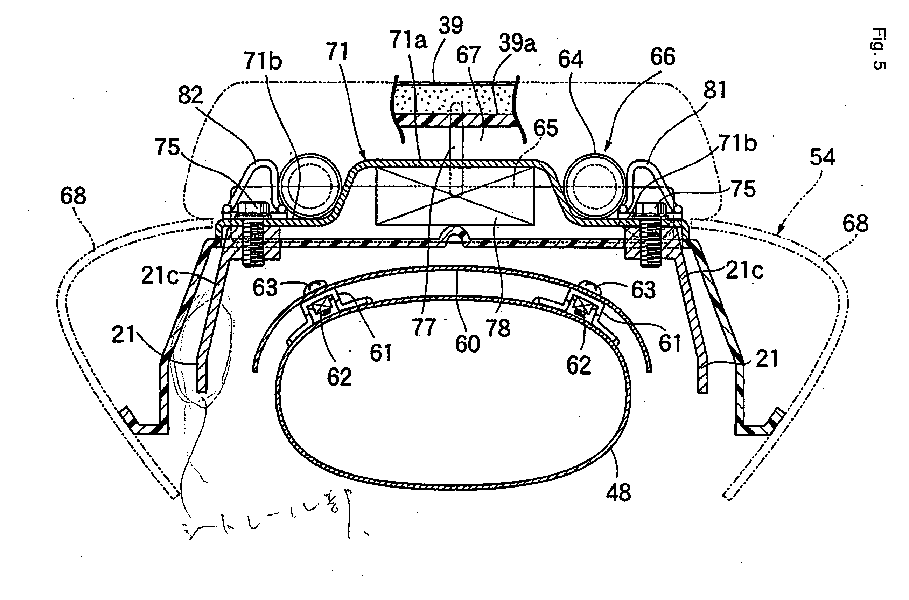

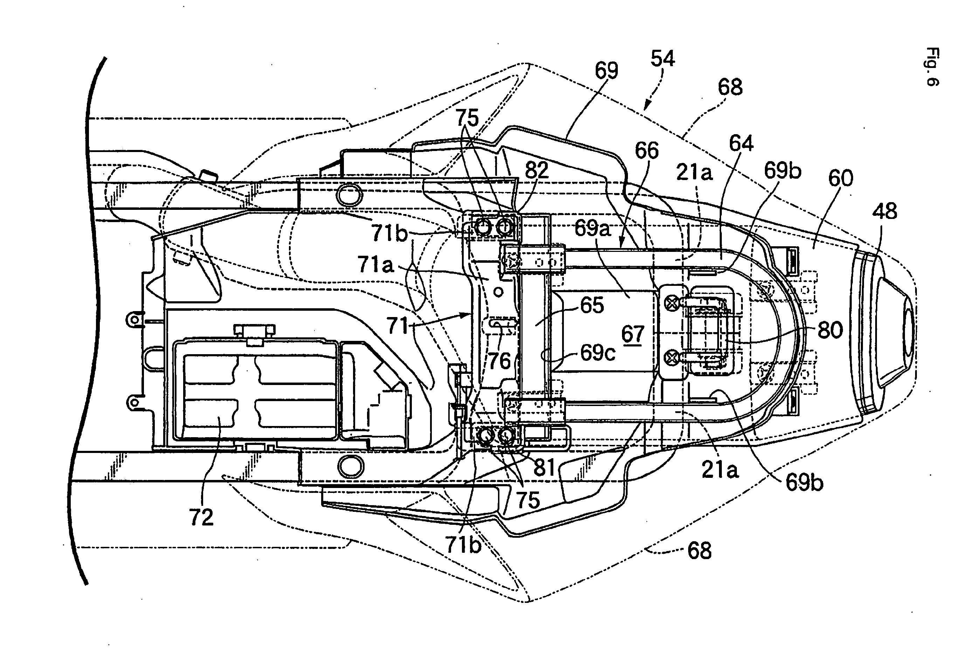

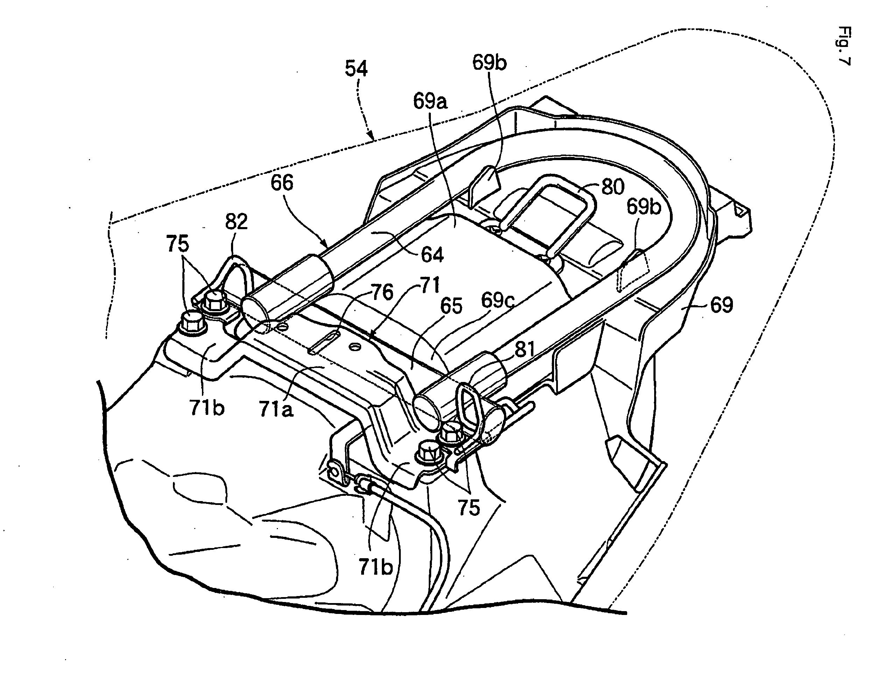

Figs. 1 to 7 show one embodiment of the invention, wherein Fig. 1 is a side view showing a motorcycle, Fig. 2 is an enlarged plan viewed from a direction shown by an arrow 2 in Fig. 1, Fig. 3 is a sectional view viewed along a line 3-3 in Fig. 2, Fig. 4 is a plan viewed along a line 4-4 shown in Fig. 3 in a state in which a rear cover is detached, Fig. 5 is a sectional view viewed a long a line 5-5 inFig. 3, Fig. 6 isaplancorresponding to Fig. 4 in a state in which upper and side covers out of the rear cover are detached, and Fig. 7 is a perspective view showing the state shown in Fig. 6 viewed from the diagonal upside.

First as shown in Fig. 1, a body frame F of a motorcycle which is a vehicle is provided with a head pipe 12 that supports a front fork 11 supporting a front wheel WF so that the front fork can be steered, a pair of right and left main frames 13 extended from the head pipe 12 so that the rear lowers, a pair of right and left engine hangers 14 welded to the head pipe 12 and each front of both main frames 13 and extended downward from the main frames 13, coupling pipes 16 for coupling each lower part of both engine hangers 14 and supporting plates 15 provided to each rear of the main frames 13, a pair of right and left pivot plates 17 extended downward from each rear of the main frames 13, a first cross pipe 18 tying each front of the main frames 13, a second cross pipe 19 tying each upper part of both pivot plates 17, a third cross pipe 20 tying each lower part of both pivot plates 17 and a pair of right and left seat rails 21 extended so that each rear rise and coupled to each rear of both main frames 13.

Right and left separate steering handlebars 22 are coupled to the upper end of the front fork 11. Besides, a steering damper 23 is provided to each upper part of the head pipe 12 and the front fork 11.

A multi-cylinder engine E in which four cylinders for example are arranged in parallel is supported by each lower part of both engine hangers 14 and each upper part and each lower part of both pivot plates 17 in a direction of the width of the body frame F.

The front end of a swing arm 24 is supported via a spindle 25 by each intermediate part in a vertical direction of both pivot plates 17 so that the swing arm can be oscillated, and the axle 26 of a rear wheel WR is supported by the rear end of the swing arm 24 so that the axle can be turned.

Motive power from the output shaft 27 of a transmission built in the body of the engine E is transmitted to the rear wheel WR via chain transmission means 28, the chain transmission means 28 is composed of a driving sprocket 29 fixed to the output shaft 27, a driven sprocket 30 fixed to the rear wheel WR and a chain without an end 31 wound on the sprockets 29, 30 and is arranged on the left side of the engine E in a traveling direction of the motorcycle.

A link mechanism 32 is provided between the third cross pipe 20 for coupling each lower part of both pivot plates 17 and the swing arm 24, and the lower end of a rear cushion unit 33 the upper end of which is coupled to the front of the swing arm 24 is coupled to a link 34 forming the link mechanism 32.

An air cleaner 35 for decontaminating air supplied to the engine E is arranged at the back of the head pipe 12 out of the body frame F on the upside of the engine E, a fuel tank 36 covering the rear and the upper part of the air cleaner 35 is mounted on both main frames 13 out of the body frame F, and a radiator 37 is arranged in front of the engine E.

A main seat 38 for seating a rider is supported by the seat rails 21 at the back of the fuel tank 36 and a pillion seat 39 for seating a passenger is supported by the seat rails 21 in a position backward apart from the main seat 38.

Decontaminated air from the air cleaner 35 is supplied to each cylinder of the engine E via fannels 39 the upper parts of which are let in the air cleaner 35 and throttle bodies 40 connected to the lower ends of the fannels 39, and first injectors 41 for injecting fuel at the time of the high-speed revolution of the engine E are attached to the air cleaner corresponding toeachcylinderof theengineE. Second injectors 42 for injecting fuel in a state in which the engine E is operated are attached to the throttle bodies 40. An intake duct 43 for taking outside air in the air cleaner 35 is arranged below the head pipe 21 in a state in which the intake duct is extended forward from the air cleaner 35.

Individual exhaust pipes 44, 44, --- extended downward from the front of the engine E are individually connected to each cylinder in a lower part of the side wall on the front side of the engine E, and a pair of first collecting exhaust pipes 45 for connecting a pair of individual exhaust pipes 44, 44 in common are arranged so that the first collecting exhaust pipes extend substantially longitudinally below the engine E. Besides, a pair of the first collecting exhaust pipes 45 are connected to a single second collecting exhaust pipe 47 in an intermediate part of which a first exhaust muffler 46 is set in common, and the downstream end of the second collecting exhaust pipe 47 is connected to a second exhaust muffler 48. The second collecting exhaust pipe 47 rises, being curved toward the right side of the body from the downside of the engine E between the rear wheel WR and the engine E, is further extended backward above the rear wheel WR, and an exhaust control valve 49 for changing the area of a flow according to the speed of the engine E and controlling exhaust pulsation is arranged in the immediate part of the second collecting exhaust pipe 47. The first exhaust muffler 46 is set in a part in which the second collecting exhaust pipe 47 rises and the downstream end of the second exhaust muffler 48 is arranged above the axle 26 of the rear wheel WR.

Each extended diameter part 45a is provided to the first collecting exhaust pipes 45 in a part arranged on the upstream side of the first exhaust muffler 46 and on the downside of the engine E, and a catalyst is housed in the extended diameter parts 45a. When the catalyst is arranged on the downside of the engine E as described above, exhaust gas exhausted from theengineEcanflowinthecatalystatrelativelyhightemperature.

The front of the head pipe 12 is covered with a front cowl 51 made of synthetic resin, both sides of the front of the body are covered with center cowls 52 ranging to the front cowl 51 and made of synthetic resin, and lower cowls 53 covering the engine E from both sides and made of synthetic resin are connected to the center cowls 52. The rears of the seat rails 21 are covered with a rear cover 54.

A front fender 55 covering the upside of the front wheel WF is attached to the front fork 11 and a rear fender 56 covering the upside of the rear wheel WR is attached to the seat rails 21.

As shown in Figs. 2 to 5, joints 21a, 21a curved inside so that they are mutually matched are integrated with the rear ends of a pair of the right and left seat rails 21, 21, joining flanges 21b, 21b are provided to the ends of the joints 21a, 21a, that is, the matched ends, and the joining flanges 21b, 21b are connected by a bolt 57 and a nut 58.

The second co l lecting exhaus t pipe 47 and the second exhaust muffler 48 are arranged between both seat rails 21, 21, and the upside of a part from the intermediate part of the second collecting exhaust pipe 47 to the second exhaust muffler 48 and the upside of the second exhaust muffler 48 are covered with a heat insulator 60.

Plural mounting plates 61 provided with welt nuts 62 are fastened to the upside of the second exhaust muffler 48 by welding and others and the heat insulator 60 is fixed to the second exhaust muffler 48 by fitting and tightening screws 63 piercing the heat insulator 60 and each mounting plate 61 into the weld nuts 62. In addition, supporting plates 60a, 60a for holding the joining flanges 21b, 21b of both seat rails 21, 21 between both supporting plates are fastened to the heat insulator 60 and are fixed to both joining flanges 21b, 21b by jointly fastening the supporting plates by the bolt 57 and the nut 58. That is, as the heat insulator 60 is supported by both seat rails 21, 21 and is fixed to the second exhaust muffler 48, the second exhaust muffler 48 is also supported by both seat rails 21, 21.

As also shown in Figs. 6 and 7, the rear cover 54 covers at least the outside of each rear of both seat rails 21, 21, and a housing 67 that can house a anti-theft U-shaped locking tool 66 provided with a substantially U-shaped hook 64 and a bar 65 detachable in a direction perpendicular to both ends of the hook 64 is formed inside the rear cover 54.

The rear cover 54 is at least provided with a pair of right and left side covers 68, 68 covering a pair of the right and left seat rails 21, 21 from the outside and a bottom cover 69 forming the bottom of the housing 67, provided between both side covers 68, 68 and covering both seat rails 21, 21 from the upside, and in this embodiment, both side covers 68, 68 are integrated with an upper cover 70 forming the ceiling of the housing 67. In addition, the bottom cover 69 is formed so that both sides cover most of each rear of the seat rails 21, 21 from the outside, are extended below the seat rails 21, 21 and are provided with a substantially U-shaped cross section open to the downside, prevents the seat rails 21, 21 from being seen from the outside owing to such a shape and can enhance appearance quality.

To increase the volume of the housing 67, a swollen part swollen downward may be also provided to the bottom cover 69 between both seat rails 21, 21.

Protrusions 21c, 21c which pierce the bottom cover 69 out of the rear cover 54 and the upper ends of which are protruded into the housing 67 are integrated with a pair of the right and left seat rails 21, 21, and a metallic cross plate 71 is laid between the upper ends of both protrusions 21c, 21c in the housing 67.

A high-level part 71a raised upward in the center between a pair of seat rails 21, 21 and a pair of low-level parts 71b, 71b holding the high-level part 71a between them are provided to the cross plate 71, and both low-level parts 71b, 71b are respectively fastened to the upper ends of the protrusions 21c, 21c of both seat rails 21 by a pair of bolts 75, 75 for example.

The anti-theft U-shaped locking tool 66 is housed in the housing 67 on the rear side of the cross plate 71, and a battery 72 and others are housed and fixed in the housing 67 in front of the cross plate 71. A rear opening 73 for enabling the setting/extraction of the anti-theft U-shaped locking tool 66 onto/from the housing 67 and a front opening 74 for enabling the setting/extraction of the battery 72 and others onto/from the housing 67 are provided to the upper cover 70 out of the rear cover 54, the rear opening 73 is covered with the pillion seat 39 that also functions as a lid, and the front opening 74 is covered with the main seat 38 that also functions as a lid.

A substantially U-shaped locking member 77 inserted into an insertion hole 76 provided to the high-level part 71a of the cross plate 71 so that the substantially U-shaped locking member can be detached is fastened to the front of the bottom plate 39a with which the pillion seat 39 is provided, and a locking switching means 78 for switching fitting to the locking member 77 and the release of fitting according to key operation not shown is provided to the bottom of the high-level part 71a in a part corresponding to the insertion hole 76.

A fitting concave portion 79 open to the rear side in a substantially U shape is formed in the rear of the bottom plate 39a, and a fitting member 80 which can be fitted into the fitting concave portion 79 so that the fitting member can be detached is fastened to the joints 21a, 21a with the bottom cover 69 held between the joints 21a, 21a of the seat rails 21, 21.

Therefore, the extraction of the anti-theft U-shaped locking tool 66 from the housing 67 and the housing of the anti-theft U-shaped locking tool 66 into the housing 67 are enabled by opening the rear opening 73 by lifting the pillion seat 39 so that the fitting of the locking switching means 78 and the locking member 77 is released and the fitting member 80 is detached from the fitting concave portion 79.

The main seat 38 is switched to a locked state and a locking released state by structure not shown, closes the front opening 74 so that the front opening can be opened, when the battery 72 and others are replaced, operation for lifting the main seat 38 is executed and the front opening 74 can be opened.

The hook 64 with which the anti-theft U-shaped locking tool 66 housed in the rear of the housing 67 is provided is fitted to the cross plate 71 and both ends of the hook 64 are fitted onto the low-level parts 71b, 71b on both sides of the cross plate 71.

In addition, position regulating members 81, 82 for positioning both ends of the bar 65 with which the anti-theft U-shaped locking tool 66 is provided are fixed onto the low-level parts 71b, 71b. Besides, a raised part 69a raised upward for positioning the hook 64 in a direction of the width of the body and located inside the hook 64 of the anti-theft U-shaped locking tool 66 is provided to the bottom cover 69 out of the rear cover 54, a pair of regulating plates 69b, 69b for positioning the hook 64 in the direction of the width of the body so that they are touched to the insides of the rear of the hook 64 are provided to the bottom cover 69, and further, a concave portion 69c for housing a lower part of the bar 65 out of the anti-theft U-shaped locking tool 66 is provided to the bottom over 69 between the cross plate 71 and the raised part 69a.

Next, to explain the action of this embodiment, as the housing 67 is formed inside the rear cover 54 at least provided with a pair of the right and left side covers 68, 68 covering a pair of the right and left seat rails 21, 21 from the outside and the bottom cover 69 forming the bottom of the housing 67, provided between both side covers 68, 68 and covering a pair of the right and left seat rails 21, 21 from the upside and the anti-theft U-shaped locking tool 66 is formed in the housing 67, a degree of freedom in design below and between both seat rails 21, 21 can be enhanced.

In addition, as the protrusions 21c, 21c which pierce the bottom cover 69 out of the rear cover 54 and the upper ends of which are protruded into the housing 67 are provided to the seat rails 21, 21 and the hook 64 with which the anti-theft U-shaped locking tool 66 is provided is fitted to the cross plate 71 laid between the upper ends of both protrusions 21c, 21c in the housing 67, the supporting rigidity of the anti-theft U-shaped locking tool 66 can be also enhanced.

Besides, as the second exhaust muffler 48 ranging to the engine E suspended from the main frame 13 is arranged between both seat rails 21, 21 below the bottom cover 69 out of the rear cover 54 and is supported by both seat rails 21, 21, the second exhaust muffler 48 can be arranged effectively utilizing space made between both seat rails 21, 21.

Further, as the high-level part 71a raised upward in the center between both seat rails 21, 21 and a pair of the low-level parts 71b, 71b holding the high-level part 71a between them and fastened to both protrusions 21c, 21c are provided to the cross plate 71 and both ends of the hook 64 with which the anti-theft U-shaped locking tool 66 is provided are fitted to both low-level parts 71b, 71b, the rigidity of the cross plate 71 can be enhanced by curving the cross plate 71 and both ends of the hook 64 can be stably supported by the cross plate 71 effectively utilizing the curve of the cross plate 71.

The embodiment of the invention has been described above, however, the invention is not limited to the embodiment and various design changes without deviating from the invention disclosed in the claims are possible.

For example, in the embodiment, the case that the main seat 38 and the pillion seat 39 are used for a lid is described, however, a dedicated lid separate from the seat may be also provided on the rear cover 54.

### [Effect of the Invention]

As described above, according to the invention according to Claim 1, a degree of freedom in design below and between both seat rails can be enhanced and in addition, the supporting rigidity of the anti-theft U-shaped locking tool can be also enhanced.

Besides, according to the invention according to Claim 2, the exhaust muffler can be arranged effectively utilizing space made between both seat rails.

Further, according to the invention according to Claim 3, the rigidity of the cross plate can be enhanced and both ends of the hook can be stably supported by the cross plate effectively utilizing the curve of the cross plate.

### [Description of Reference Numbers]

- 11 ---: Front fork
- 12 ---: Head pipe
- 13 ---: Main frame
- 21 ---: Seat rail
- 21c ---: Protrusion
- 38 ---: Main seat as lid
- 39 ---: Pillion seat as lid
- 48 ---: Exhaust muffler
- 54 ---: Rear cover
- 64 ---: Hook
- 65 ---: Bar
- 66 ---: Anti-theft U-shaped locking tool
- 67 ---: Housing
- 68 ---: Side cover
- 69 ---: Bottom cover
- 71 ---: Cross plate
- 71a ---: High-level part
- 71b ---: Low-level part
- E ---: Engine
- WF ---: Front wheel

## Claims

1. A housing support structure of an anti-theft U-shaped locking tool in a vehicle where a pair of right and left seat rails (21) extended so that the rear is higher are connected to the rear of a main frame (13) extended so that the rear is lower fromaheadpipe (12) supporting a front fork (11) supporting a front wheel (WF) so that the front fork can be steered and a housing (67) that can house an anti-theft U-shaped locking tool (66) provided with a substantially U-shaped hook (64) and a bar (65) detachable in a direction perpendicular to both ends of the hook (64) is formed inside a rear cover (54) which covers at least each outside of both seat rails (21) and above which lids (38, 39) that can be lifted are provided, wherein:
the rear cover (54) is at least provided with a pair of right and left side covers (68) covering both seat rails (21) from the outside and a bottom cover (69) forming the bottom of the housing (67), provided between both side covers (68) and covering both seat rails (21) from the upside;
a protrusion (21c) which pierces the bottom cover (69) and the upper end of which is protruded into the housing (67) is provided to both seat rails (21); and
the hook (64) with which the anti-theft U-shaped locking tool (66) housed in the housing (67) is provided is fitted to a cross plate (71) laidbetween the upper ends of bothprotrusions (21c) in the housing (67).

2. A housing support structure of an anti-theft U-shaped locking tool in a vehicle according to Claim 1, wherein:
an exhaust muffler (48) ranging to an engine (E) suspended from the main frame (13) is arranged between both seat rails (21) below the bottom cover (69) and is supported by both seat rails (21).

3. A housing support structure of an anti-theft U-shaped locking tool in a vehicle according to Claim 1 or 2, wherein:
a high-level part (71a) raised upward in the center between both seat rails (21) and a pair of low-level parts (71b) holding the high-level part (71a) between them and fastened to both protrusions (21c) are provided to the cross plate (71); and
both ends of the hook (64) with which the anti-theft U-shaped locking tool (66) is provided are fitted to both low-level parts (71b).
